# EUROPEAN PATENT APPLICATION

(11) **EP 3 419 359 A1**
(43) Date of publication of application: **26.12.2018**
(21) Application number: 17753286.8
(22) Date of filing: 16.02.2017
(51) Int. Cl.: H04W 72/04, H04L 27/26, H04W 28/04, H04W 28/06, H04W 72/12

(54) **USER TERMINAL, WIRELESS BASE STATION, AND WIRELESS COMMUNICATION METHOD**

(30) Priority: 19.02.2016 JP 2016029885
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/005751
(87) International publication number: WO 2017/142031

(57) **Abstract**

In order that a user terminal properly performs communication even when a shortened TTI is applied, a user terminal that performs communication in a second Transmission Time Interval (TTI) having a shorter TTI length than a first TTI, is provided with a reception unit that receives, from a radio base station, first downlink control information transmitted for each first TTI, and second downlink control information transmitted in the second TTI, and a control unit that controls UL transmission in the second TTI based on the first control information and the second control information, in which the control unit controls the UL transmission using the first downlink control information that is received before a predetermined period from the second TTI in which the UL transmission is performed, and the second downlink control information that is included in the first TTI in which the first downlink control information is transmitted.

## Description

### Technical Field

The present invention relates to a user terminal, a radio base station, and a radio communication method in next-generation mobile communication systems.

### Background Art

In UMTS (Universal Mobile Telecommunication System) networks, for the purpose of higher data rates, lower delay, and the like, Long Term Evolution (LTE) has been specified (Non-Patent Literature 1). For the purpose of wider bands and higher speed than LTE (also called LTE Rel. 8), LTE Advanced (also called LTE Rel. 10, 11, or 12) has been specified, and further, successor systems (LTE Rel. 13 and beyond) are now under study.

In LTE Rel. 10/11, in order to achieve a wider band, carrier aggregation (CA) for aggregating a plurality of component carriers (CCs) has been introduced. Each of the CCs is configured with a system band in LTE Rel. 8 as one unit. Further, in the CA, a plurality of CCs of the same radio base station (eNB: eNodeB) is set to each user terminal (UE: User Equipment).

Meanwhile, in LTE Rel. 12, dual connectivity (DC) that allows a plurality of cell groups (CGs) of different radio base stations to be set to a user terminal has also been introduced. Each of the cell groups is composed of at least one cell (CC). In DC, a plurality of CCs of different radio base stations is aggregated, and thus, DC is also called Inter-eNB CA or the like.

Further, in the existing systems (LTE Rel. 8 to 12), a frequency division duplex (FDD) in which a downlink (DL) transmission and an uplink (UL) transmission are performed in different frequency bands, and a time division duplex (TDD) in which the DL transmission and the UL transmission are temporally switched to each other in the same frequency band have been introduced. For example, in TDD, it is strictly defined whether each subframe is used on uplink (UL) or downlink (DL), based on a UL/DL configuration.

In such existing systems, Transmission Time Interval (TTI) applied to the DL transmission and the UL transmission between a radio base station and a user terminal is set to 1 ms and controlled. TTI in LTE systems (Rel. 8 to 12) is also called a subframe length.

### Citation List

### Non-Patent Literature

[Non-Patent Literature 1] 3GPP TS 36. 300 "Evolved Universal Terrestrial Radio Access (E-UTRA) and Evolved Universal Terrestrial Radio Access Network (E-UTRAN); Overall description; Stage 2"

### Summary of Invention

### Technical Problem

In radio communication systems of LTE Rel. 13 and beyond (for example, 5G), it is conceived that communication in high-frequency bands, such as several tens GHz, and communication for relatively small amount of data, such as IoT (Internet of Things), MTC (Machine Type Communication), and M2M (Machine to Machine), are performed. Further, there are increasing demands for D2D (Device to Device) communication and V2V (Vehicular to Vehicular) communication that require low latency communication.

In such future radio communication systems, in order to provide sufficient communication services, communication latency reduction has been studied. For example, it has been studied to perform communication using TTI (Transmission Time Interval) being the minimum time unit for scheduling, the TTI having a time length shorter than 1 ms of the existing LTE systems (LTE Rel. 8 to 12)(may be also referred to as shortened TTI).

In the existing LTE systems, however, communication timing control is performed in units of subframe (1 ms), but it is not yet specified how to control transmission/reception of signals (for example, such as transmission/reception timing) in a case where shortened TTI is introduced and communication is performed. For this reason, even in the case where the shortened TTI is introduced and communication is performed, a control method that allows proper communication is desired.

The present invention has been made in view of such a respect, and it is one of objects to provide a user terminal, a radio base station, and a radio communication method that, even when shortened TTI is applied, allows proper communication.

### Solution to Problem

A user terminal according to an aspect of the present invention is a user terminal that performs communication in a second Transmission Time Interval (TTI) having a shorter TTI length than a first TTI, comprising: a reception unit that receives, from a radio base station, first downlink control information transmitted for each first TTI, and second downlink control information transmitted in the second TTI; and a control unit that controls UL transmission in the second TTI based on the first control information and the second control information, wherein the control unit controls the UL transmission using the first downlink control information that is received before a predetermined period from the second TTI in which the UL transmission is performed, and the second downlink control information that is included in the first TTI in which the first downlink control information is transmitted.

### Advantageous Effects of Invention

According to the present invention, even when shortened TTI is applied, communication can be properly performed.

### Brief Description of Drawings

FIG. 1 is a diagram illustrating an example of a Transmission Time Interval (TTI) in the existing LTE systems (Rel. 8 to 12);
FIG. 2 contains diagrams that describe a normal TTI and a shortened TTI;
FIGs. 3A and 3B are diagrams illustrating configuration examples of a shortened TTI;
FIGs. 4A to 4C are diagrams illustrating setting examples of a normal TTI and a shortened TTI;
FIG. 5 is a diagram illustrating an example of DL scheduling using two kinds of DCI;
FIG. 6 is a diagram illustrating an example of UL scheduling using two kinds of DCI;
FIG. 7 is a diagram illustrating an example of a case where a ratio of TTIs between uplink and downlink is changed in TDD;
FIG. 8 is a diagram illustrating an example of UL transmission using shortened TTIs in the present embodiment;
FIG. 9 is a diagram illustrating another example of UL transmission using shortened TTIs in the present embodiment;
FIG. 10 is a diagram illustrating another example of UL transmission using shortened TTIs in the present embodiment;
FIG. 11 is a diagram illustrating another example of UL transmission using shortened TTIs in the present embodiment;
FIG. 12 is a schematic configuration diagram illustrating an example of a schematic configuration of a radio communication system according to the present embodiment;
FIG. 13 is a diagram illustrating an example of a whole configuration of a radio base station according to the present embodiment;
FIG. 14 is a diagram illustrating an example of a function configuration of a radio base station according to the present embodiment;
FIG. 15 is a diagram illustrating an example of a whole configuration of a user terminal according to the present embodiment;
FIG. 16 is a diagram illustrating an example of a function configuration of a user terminal according to the present embodiment; and
FIG. 17 is a diagram illustrating a hardware configuration example of a radio base station and a user terminal according to an embodiment of the present invention.

### Description of Embodiments

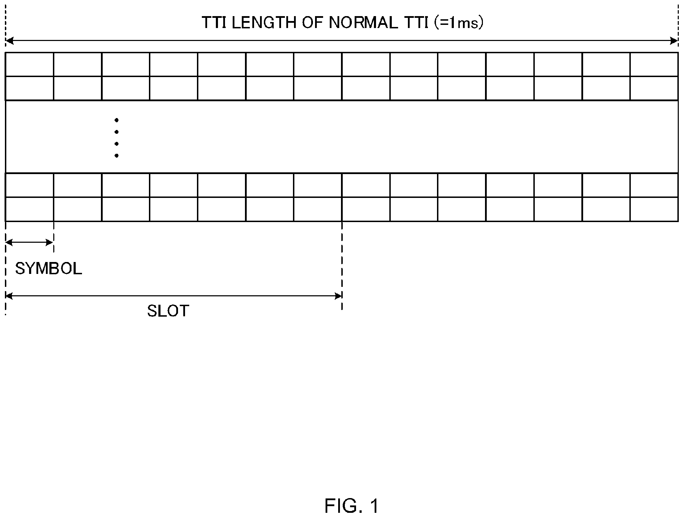

FIG. 1 is an explanatory diagram of an example of Transmission Time Interval (TTI) in the existing systems (LTE Rel. 8 to 12). As shown in Fig. 1, each of TTIs in LTE Rel. 8 to 12 (hereinafter referred to as "normal TTIs") has a time length of 1 ms. Each of the normal TTIs is also called a subframe, and is composed of two time slots. TTI is a transmission time unit of one data packet (transport block) having been channel-coded, and becomes a processing unit for scheduling, link adaptation, and the like.

As shown in FIG. 1, on downlink (DL), in the case of a normal cyclic prefix (CP), a normal TTI is configured to include fourteen OFDM (Orthogonal Frequency Division Multiplexing) symbols (seven OFDM symbols for each slot). Each of the OFDM symbols has a time length (a symbol length) of 66.7 µs, and a normal CP of 4.76 µs is added thereto. The symbol length and a subcarrier spacing have a relationship in which any one of these is the reciprocal of the other one of these, and thus, when the symbol length is 66.7 µs, a subcarrier spacing is 15 kHz.

Further, on uplink (UL), in the case of a normal cyclic prefix (CP), the normal TTI is configured to include fourteen SC-FDMA (Single Carrier Frequency Division Multiple Access) symbols (seven SC-FDMA symbols for each slot). Each of the SC-FDMA symbols has a time length (a symbol length) of 66.7 µs, and the normal CP of 4.76 µs is added thereto. The symbol length and the subcarrier spacing mutually have a relation of an inverse number, and thus, when the symbol length is 66.7 µs, the subcarrier spacing is 15 kHz.

Note that, in the case of an extended CP, the normal TTI may be configured to include twelve OFDM symbols (or twelve SC-FDMA symbols). In this case, each of the OFDM symbols (or each of the SC-FDMA symbols) has a time length of 66.7 µs, and the extended CP of 16.67 µs is added thereto.

Meanwhile, in future radio communication systems, such as LTE Rel. 13 and beyond, and 5G, radio interfaces suitable for high-frequency bands, such as several tens GHz, and radio interfaces that minimize latency for use in IoT (Internet of Things), MTC (Machine Type Communication), M2M (Machine To Machine), D2D (Device To Device), and V2V (Vehicular To Vehicular) are desired.

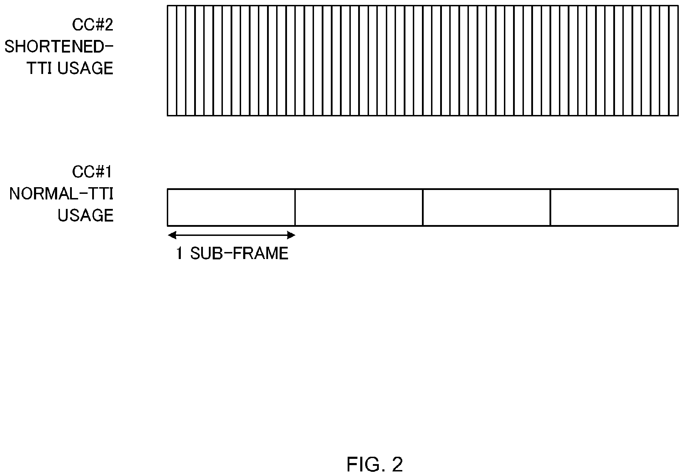

Thus, in such future communication systems, it is conceived that communication is performed using shortened TTI having a TTI length shorter than 1 ms (see FIG. 2). FIG. 2 illustrates a cell (CC #1) using the normal TTI (1 ms), and a cell (CC #2) using the shortened TTI. Further, in the case of using the shortened TTI, it is conceived that the subcarrier spacing is changed from that of the normal TTI (for example, the subcarrier spacing is extended).

In the case of using TTI having a shorter time length than the normal TTI (hereinafter, referred to as "shortened TTI"), a time margin for processing (such as coding and decoding, for example) in a user terminal or a radio base station is increased, and thus, processing latency can be reduced. Further, in the case of using shorted TTI, the number of user terminals accommodatable per unit time (for example, 1 ms) can be increased. Hereinafter, the configuration of the shortened TTI, and the like will be described.

### (Configuration Example of Shortened TTI)

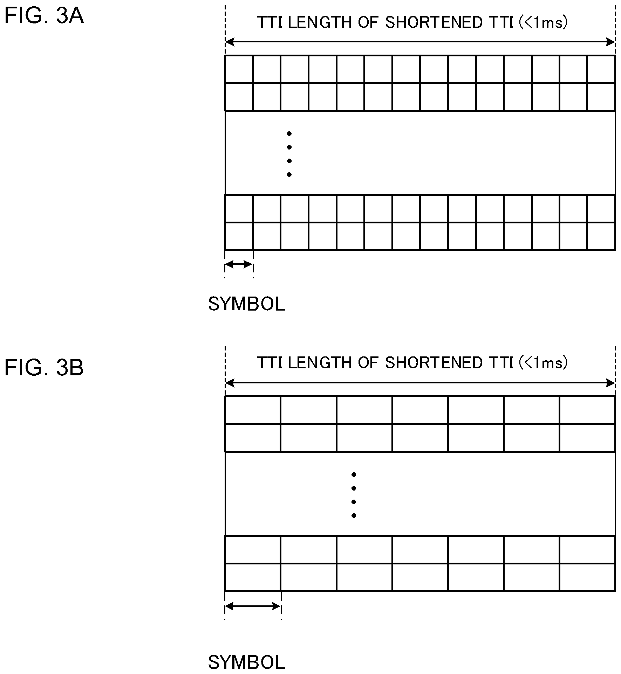

The configuration example of the shortened TTI will be described with reference to FIGs. 3A and 3B. As shown in FIGs. 3A and 3B, the shorted TTI has a time length (TTI length) smaller than 1 ms. The shortened TTI may have one or more of TTI lengths, such as 0.5 ms, 0.25 ms, 0.2 ms, and 0.1 ms, multiple number of which is 1 ms. Alternatively, since the normal TTI includes fourteen symbols in the case of the normal CP, the shorted TTI may have one or more TTI lengths, such as 7/14 ms, 4/14 ms, 3/14 ms, 2/14 ms, and 1/14 ms, each of which is an integer multiple of 1/14 ms. Further, since the normal TTI includes twelve symbols in the case of the extended CP, the shorted TTI may have one or more TTI lengths, such as 6/12 ms, 4/12 ms, 3/12 ms, 2/12 ms, and 1/12 ms, each of which is an integer multiple of 1/12 ms.

Here, also in the shortened TTI, similarly to prior LTE, whether it uses the normal CP or the expansion CP can be configured by broadcast information or higher-layer signaling, such as RRC signaling. This makes it possible to introduce the shortened TTI while maintaining compatibility (synchronization) with the normal TTI, having a time length of 1 ms.

Noted that, in FIGs. 3A and 3B, an example of the case of the normal CP is illustrated, but the configuration of the shortened TTI is not limited thereto. The shortened TTI is simply required to have a time length shorter than that of the normal TTI, and the number of symbols in the shortened TTI, symbol length, CP length, and the like may be optionally configured. Further, although, in the following description, an example in which OFDM symbols are used on DL and SC-FDMA symbols are used on UL will be described, the present invention is not limited to the example.

FIG. 3A is a diagram illustrating a first configuration example of the shortened TTI. As shown in FIG. 3A, in the first configuration example, the shortened TTI is composed of fourteen OFDM symbols (or SC-FDMA symbols) having the same number as the normal TTI, and each of the OFDM symbols (each of the SC-FDMA symbols) has a symbol length shorter than the symbol length (= 66.7 µs) of the normal TTI.

As shown in FIG. 3A, in a case of shortening the symbol length while maintaining the number of the symbols of the normal TTI, it is possible to divert the physical-layer signal configuration (the RE arrangement or the like) of the normal TTI. Further, in a case of maintaining the number of symbols of the normal TTI, it is possible to include the same amount of information (the same number of bits) as that of the normal TTI also in the shorted TTI. In contrast, since a symbol time length is different from that of the normal TTI, it is difficult to frequency-multiplex the signals in the shortened TTI shown in FIG. 3A with the signals in the normal TTI in the same system band (or cell, CC).

Further, the symbol length and the subcarrier spacing mutually have a relation of inverse number, and thus, in a case of shortening the symbol length as shown in FIG. 3A, the subcarrier spacing becomes wider than 15 kHz of the normal TTI. This widening of the subcarrier spacing effectively prevents an inter-channel interference due to Doppler shift during movement of a user terminal, and transmission quality degradation due to phase noise of a receiver of a user terminal. Particularly, in a high frequency band, such as several tens GHz, the widening of the subcarrier spacing effectively prevents the transmission quality degradation.

FIG. 3B is a diagram illustrating a second configuration example of the shortened TTI. As shown in FIG. 3B, in the second configuration example, the shortened TTI is composed of the smaller number of OFDM symbols (or SC-FDMA symbols) than the normal TTI, and each of the OFDM symbols (each of the SC-FDMA symbols) has the same symbol length (= 66.7 µs) as that of the normal TTI. In this case, it is possible to constitute the shortened TTI in units of symbols in the normal TTI (configuration with the reduced number of symbols). For example, it is possible to constitute the shortened TTI using partial symbols among the fourteen symbols included in one subframe. In FIG. 3B, the shortened TTI is composed of seven OFDM symbols (SC-FDMA symbols) whose number is half the number in the normal TTI.

As shown in FIG. 3B, in a case of reducing the number of symbols while maintaining the symbol length, it is possible to reduce the amount of information (the number of bits) included in the shortened TTI than in the normal TTI. Thus, it is possible to perform reception processing (such as demodulation and decoding) on information included in the shortened TTI in a shorter time than in the normal TTI, and to reduce the processing latency. Further, it is possible to frequency-multiplex the signals in the shortened TTI shown in FIG. 3B with the signals in the normal TTI in the same system band (or cell, CC) and to maintain the compatibility with the normal TTI.

### (Setting Example of Shortened TTI)

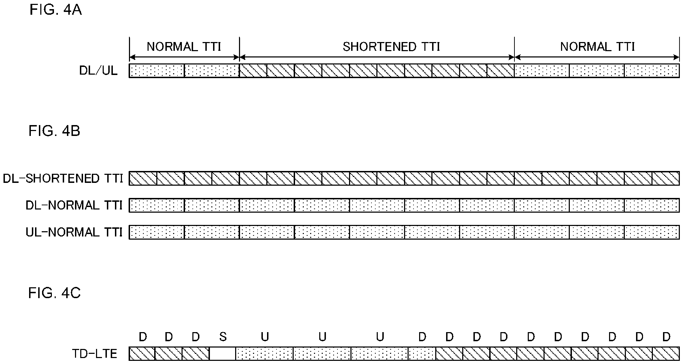

A setting example of the shortened TTI will be described. In a case of employing the shortened TTI, it is also possible to set both of the normal TTI and the shortened TTI to a user terminal so as to have the compatibility with the existing systems (LTE Rel. 8 to 12). FIGs. 4a to 4C are diagrams illustrating an example of the setting of the normal TTI and the shortened TTI. Here, FIGs. 4a to 4C show just the example, and the setting of the normal TTI and the setting is not limited to this example.

FIG. 4A is a diagram illustrating a first setting example of the shortened TTI. As shown in FIG. 4A, the normal TTI and the shortened TTI may be mixedly present temporally within the same component carrier (CC) (frequency domain). Specifically, the shortened TTI may be set to a specific subframe (or a specific radio frame) within the same CC. For example, in FIG. 4A, the shortened TTIs are set in five successive subframes within the same CC, and the normal TTIs are set in other subframes. The specific subframe may be, for example, a settable subframe among MBSFN subframes, or a subframe including (or not including) a specific signal, such as a MIB or a synchronization channel. Here, the number and the positions of subframes to each of which the shortened TTI is set are not limited to those shown in FIG. 4A.

FIG. 4B is a diagram illustrating a second setting example of the shortened TTI. As shown in FIG. 4B, the CC of the normal TTIs and the CC of the shortened TTIs may be aggregated and the carrier aggregation (CA) or the dual connectivity (DC) may be performed. Specifically, the shortened TTI may be set to a specific CC (more specifically, to the DL and/or UL of a specific CC). For example, in FIG. 4B, the shortened TTI is set on DL of a specific CC, and the normal TTI is set on DL and UL of another CC. Note that, the number and the positions of CCs to which the shortened TTIs are set are not limited to those shown in FIG. 4B.

Further, in the case of CA, the shortened TTI may be set to specific CC (a primary (P) cell and/or a secondary (S) cell) of the same radio base station. Meanwhile, in the case of DC, the shortened TTI may be set to a specific CC (a P cell and/or an S cell) in a master cell group (MCG) formed by the first radio base station, or may be set to a specific CC (a primary secondary (PS) cell and/or an S cell) in a secondary cell group (SCG) formed by the second radio base station.

FIG. 4C is a diagram illustrating a third setting example of the shortened TTI. As shown in FIG. 4C, the shortened TTI may be set to any of DL and UL. For example, FIG. 4C illustrates a case where, in a TDD system, the normal TTI is set to UL and the shortened TTI is set to DL.

Further, a specific channel or signal on DL or UL may be assigned (set) to the shortened TTI. For example, an uplink control channel (PUCCH: Physical Uplink Control Channel) may be assigned to the normal TTI, and an uplink shared channel (PUSCH: Physical Uplink Shared Channel) may be assigned to the shortened TTI. For example, in this case, in a user terminal, the transmission of PUCCH is performed in the normal TTI, and the transmission of PUSCH is performed in the shortened TTI.

Further, a multi-access scheme different from OFDM (or SC-FDMA) that is a multi-access scheme in LTE Rel. 8 to 12 may be assigned (set) to the shortened TTI.

### (Notification Example of Shortened TTI)

As described above, in a case of setting a cell that uses the shortened TTI to a user terminal, it is possible for the user terminal to set (and/or detect) the shortened TTI based on an implicit or explicit notification from a radio base station. In the following description, a notification example of the shortened TTI that is applicable in the present embodiment will be described in the case of; (1) an implicit notification, or in the case of an explicit notification by at least one of; (2) broadcast information or radio resource control (RRC) signaling; (3) medium access control (MAC) signaling; and (4) physical (PHY) signaling.
(1) In the case of the implicit notification, a user terminal may set the shortened TTI (may determine that, for example, cells, channels, signals, and/or the like for communication are the shortened TTI) based on a frequency band (such as a band for 5G, an unlicensed band, for example), a system bandwidth (such as 100 MHz, for example), whether or not LBT (Listen Before Talk) is applicable in LAA (License Assisted Access), a kind of transmitted data (such as control data or speech, for example), a logical channel, a transport block, an RLC (Radio Link Control) mode, C-RNTI (Cell-Radio Network Temporary Identifier), and the like.
   Further, in a case of having detected control information (DCI) addressed to the own terminal on PDCCH that is mapped to a leading 1st, 2nd, 3rd, or 4th symbol of the normal TTI, and/or on EPDCCH having a time length of 1 ms, a relevant time interval having a time period of 1 ms and including such PDCCH/EPDCCH may be determined as the normal TTI, and in a case of having detected control information (DCI) addressed to the own terminal on PDCCH/EPDCCH configured otherwise (for example, PDCCH that is mapped to other than the leading 1st, 2nd, 3rd, or 4th symbol of the normal TTI, and/or on EPDCCH having a time length less than 1 ms), a relevant time interval having a time length less than 1 ms and including such PDCCH/ EPDCCH may be determined as the shortened TTI. Here, it is possible to detect the control information (DCI) addressed to the own terminal based on the result of CRC checking on DCI having been blind-decoded.
(2) In the case of the broadcast information or the RRC signaling, the shortened TTI may be set based on setting information notified from a radio base station (for example, a first cell) to the user terminal by the broadcast information or the RRC signaling. The setting information indicates, for example, information on a CC or/and a subframe using the shortened TTI, information on a channel or/and a signal using the shortened TTI, information on the TTI length of the shortened TTI, and the like. The user terminal sets the shortened TTI semi-statically based on the setting information from the radio base station. Note that, the mode switching between the shortened TTI and the normal TTI may be made by an RRC reconfiguration procedure, may be made by an Intra-cell handover (HO) in the P cell, or may be made by a CC (S cell) removal/addition procedure in the S cell.
(3) In the case of the MAC signaling, the shortened TTI that is set based on the setting information notified by the RRC signaling may be activated or de-activated by the MAC signaling. Specifically, the user terminal activates or de-activates the shortened TTI based on a MAC control element from the radio base station. The user terminal may de-activate the shortened TTI in a case where a timer indicating an activation period of the shortened TTI is set in advance by higher-layer signaling, such as RRC, and after the activation of the shortened TTI by an L2 control signal, the UL/DL assignment of the shortened TTI has not been made during a predetermined period. Such a timer for de-activating the shortened TTI may be configured to perform counting in units of normal TTI (1 ms), or perform counting in units of shortened TTI (for example, 0.25 ms).
   Note that, in the case of switching modes between the shortened TTI and the normal TTI in an S cell, the S cell may be considered to be once de-activated or a TA (Timing Advance) timer may be considered to have expired. This makes it possible to provide a communication stop period during the mode switching.
(4) In the case of the PHY signaling, the shortened TTI that is set based on the setting information notified by the RRC signaling may be scheduled by the PHY signaling. Specifically, the user terminal detects the shortened TTI based on information included in a received and detected downlink control channel (PDCCH (Physical Downlink Control Channel) or EPDCCH (Enhanced Physical Downlink Control Channel), which will be hereinafter referred to as PDCCH/EPDCCH).

For example, control information (DCI) for assigning the transmission or reception in the normal TTI and control information (DCI) for assigning the transmission or reception in the shortened TTI are configured to include mutually different information elements, and in case (4-1), upon detection of control information (DCI) including an information element for assigning the transmission/reception in a shortened TTI, the user terminal may recognize, as the shortened TTI, a predetermined time period including a timing at which PDCCH/EPDCCH of the control information (DCI) is detected. It is possible for the user terminal to blind-decode, on PDCCH/EPDCCH, the control information (DCI) for assigning the transmission or reception in the normal TTI and the control information (DCI) for assigning the transmission or reception in the shortened TTI. Alternatively, in case (4-2), upon detection of the control information (DCI) including an information element for assigning the transmission/reception in the shortened TTI, the user terminal may recognize, as the shortened TTI, a predetermined time period including a timing at which PDSCH or PUSCH that is scheduled by the PDCCH/EPDCCH (the downlink control information (DCI) transmitted by PDCCH/EPDCCH) of the detected DCI is transmitted/received. Alternatively, in case (4-3), upon detection of DCI including an information element for assigning the transmission/reception in the shortened TTI, the user terminal may recognize, as the shortened TTI, a predetermined time period including a timing at which retransmission control information (HARQ-ACK: Hybrid Automatic Repeat reQuest-Acknowledgement), which is also called ACK/NACK, A/N, or the like) on PDSCH or PUSCH that is scheduled by the PDCCH/EPDCCH (DCI transmitted by PDCCH/EPDCCH) of the detected DCI is transmitted or received.

In the case of detecting the shortened TTI based on information included in a downlink control channel, control information (DCI) for instructing the transmission/reception in the shortened TTI may be configured to be transmitted/received before a predetermined period of time from the transmission/reception in the shortened TTI. That is, the radio base station transmits the control information (DCI) for instructing the transmission/reception in the shortened TTI at a predetermined timing, and upon receipt of the control information (DCI), the user terminal performs the transmission/reception in the shortened TTI after a predetermined period of time (for example, after a period of time of integer multiple of a TTI length, or after a period of time of integer multiple of a subframe length). There may be a difference in appropriate signal processing algorithm (for example, channel estimation or error correction decoding) between the shortened TTI and the normal TTI. In this way, it is possible for the user terminal to ensure a period of time for changing the signal processing algorithm by transmitting/receiving the control information (DCI) for instructing the transmission/reception in the shortened TTI before a predetermined period of time from the actual transmission/reception in the shortened TTI.

A method may be applied that sets the shortened TTI by higher-layer signaling, such as RRC signaling, in advance, and switches to the transmission/reception in the normal TTI upon reception of an instruction of control information (DCI) transmitted/received on a downlink control channel. In general, the shortened TTI, for which signal processing with low latency is required, needs higher user processing ability than the normal TTI. Thus, it is possible to alleviate a load on signal processing of the user terminal due to the change of the TTI length by restricting the dynamic switching from the shortened TTI to the normal TTI, compared with a case of permitting dynamic switching from the normal TTI to the shortened TTI.

Further, the user terminal may detect the shortened TTI based on the state of the user terminal (for example, an idle state or a connected state). For example, the user terminal may be configured to, when being in the idle state, recognize all TTIs as the normal TTIs, and blind-decode only PDCCH included in the leading 1st to 4th symbols of the normal TTI, having a time length of 1 ms. Further, the user terminal may be configured to, when being in the connected state, set (and/or detect) the shortened TTI based on at least one of the above notification examples (1) to (4).

As described above, in future radio communication, it is conceived that communication is performed that applies the shortened TTI, which has a Transmission Time Interval shorter than the normal TTI, to the UL transmission and/or DL transmission. From a viewpoint of maintaining the compatibility with the existing LTE systems using the normal TTI, it is effective to decrease the number of OFDM symbols in the shortened TTI, as shown in FIG. 3B. However, in the case of realizing the shortened TTI by decreasing the number of symbols, the total number of resource elements (REs) within the shortened TTI might be decreased.

In the existing LTE systems, 168 REs (12 subcarriers × 14 symbols) are included in one PRB. Thus, the total number of REs in the normal TTI (one subframe) results is 168 × the number of PRBs (12 subcarriers × 14 symbols × the number of PRBs). Meanwhile, the total number of REs in the shortened TTI having a deceased number of symbols becomes smaller than that in the normal TTI. For example, assumed is a case where the shortened TTI is composed of four symbols. In this case, the total number of REs in the shortened TTI is 48 × the number of PRBs (12 subcarriers × 4 symbols × the number of PRBs).

Further, also in the shortened TTI, REs for mapping control signals and reference signals are needed, and thus, it becomes difficult to assign all REs to data signals. For example, in the downlink control channel (PDCCH) in the existing LTE systems, the number of REs, which is any of 36, 72, 144, and 288 (aggregation levels 1, 2, 4, and 8), is needed per downlink control information (DCI). It is possible to decrease the number of REs needed for the downlink control information to a certain degree by reducing scheduling information and the like included in the downlink control information, but a constant number of REs are needed for the assignment of the downlink control information.

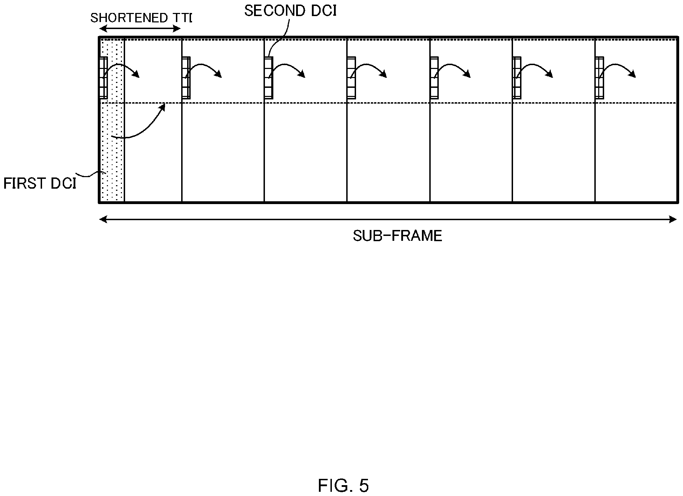

As described above, in the case of using the shortened TTI, the overhead of an L1/L2 control signal (for example, DCI) becomes a problem. Thus, the present inventors have focused attention on a scheduling control method (also called a 2-step DCI control) using two kinds of downlink control information (DCI) as a method of reducing the overhead of the L1/L2 control signal (see FIG. 5).

For example, the user terminal receives scheduling control information for the DL with each of downlink control information transmitted for each normal TTI (each subframe) and downlink control information transmitted for each shortened TTI. Here, the downlink control information transmitted for each normal TTI may be called a first DCI, Slow-DCI, or a long cycle DCI. Further, the downlink control information transmitted for each shortened TTI may be called a second DCI, Fast-DCI, a short cycle DCI, or a shortened DCI. The downlink control information transmitted for each normal TTI may be configured to use downlink control information (or an assignment region or transmission timing for existing DCI) in the existing LTE systems (Rel. 12 and before).

The Slow-DCI is a control signal transmitted to a predetermined user group (common to user terminals), and may be configured to include assignment information of radio resources (for example, PRBs), and the like. The Fast-DCI is a control signal transmitted to each user terminal (specific to user terminal), and may be configured to include assignment information of shortened TTI, a modulation and coding scheme (MCS), HARQ information (such as a HARQ process number), and the like.

In this way, the radio base station is capable of transmitting the Slow-DCI as common control information for predetermined user terminals using the shortened TTI, and the Fast-DCI as control information specific to each user terminal. In this case, information common to a user group is capable of being aggregated into the Slow-DCI, which makes it possible to reduce the overhead of the downlink control information (Fast-DCI) transmitted in the shortened TTI.

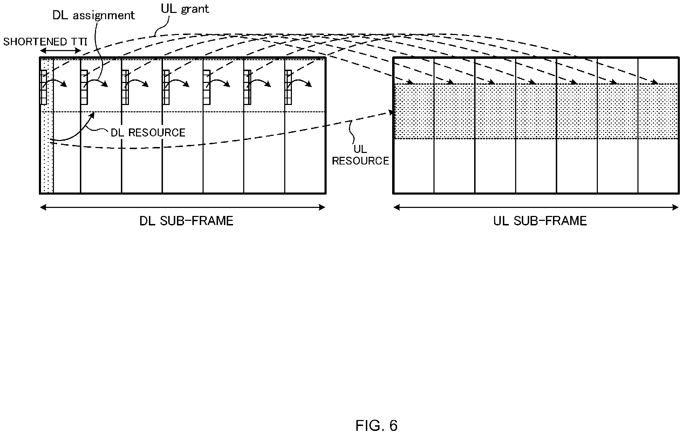

Further, the present inventors have focused attention on a point that a scheduling control method using the two kinds of downlink control information (DCI) is also applicable to scheduling for the uplink (see FIG. 6).

For example, the user terminal receives scheduling control information for UL with each of the Slow-DCI transmitted for each normal TTI and the Fast-DCI transmitted for each shortened TTI.

The Slow-DCI is a control signal transmitted to a predetermined user group, and may be configured to include assignment information of radio resources (for example, PRBs) of a UL subframe, and the like. The Fast-DCI is a control signal transmitted to an individual user, and may be configured to include scheduling of the individual user, a modulation and coding scheme, HARQ information, and the like. The radio base station is capable of transmitting the Slow-DCI that instructs the UL transmission, as common control information to predetermined user terminals using the shortened TTI and the Fast-DCI as control information specific to each user terminal.

The user terminal performs operations of DL assignment and detection of UL grant on each of the Slow-DCI and the Fast-DCI. The DL assignment and the UL grand may be distinguished in accordance with the difference between the payloads thereof, or may be configured to be distinguished in accordance with predetermined bit values (flags) included in the downlink control information.

Further, the configuration of the PRB of an uplink subframe (shortened TTI used in the UL transmission) designated by the Slow-DCI may be different from the configuration of the PRB of a downlink subframe (shortened TTI used in the DL transmission) (see FIG. 6). This enables flexible scheduling.

In this way, it becomes unnecessary to designate UL resources (for example, PRBs) to be used on UL by using Fast-DCI transmitted in the shortened TTI, by notifying assignment information of the UL resources by using the Slow-DCI. As a result, it is possible to reduce the overhead of the downlink control information (Fast-DCI), transmitted in the shortened TTI.

In addition, in TDD which switches between the UL transmission and the DL transmission, there is a trade-off between the degradation of efficiency and the reduction of latency with respect to the UL-DL switching. For example, in the case of increasing the frequency of the UL-DL switching, it is possible to reduce communication waiting time in UL and DL directions, which allows reduction of latency. However, since a period of time (gap period) is set in which communication is not performed during a predetermined time (for example, 20 µs) for the UL-DL switching, the increase of the frequency of the UL-DL switching degrades the frequency usage efficiency.

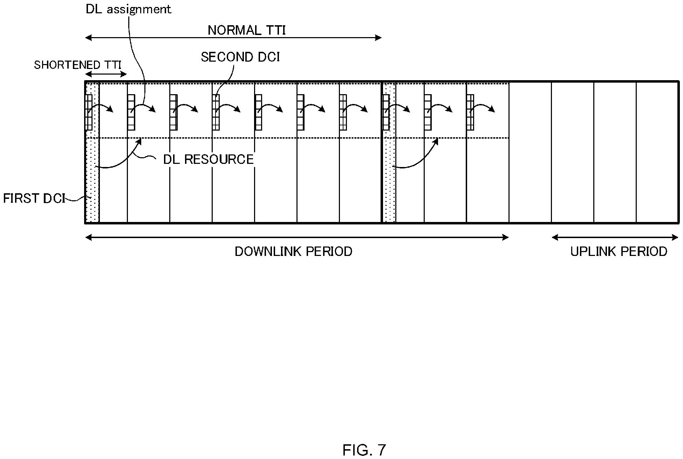

For this reason, the present inventors have focused attention on that, when communication in the shortened TTI is performed in TDD, in order to achieve both of the degradation of efficiency and the reduction of latency to some extent, it becomes effective to control communication not by equally setting ratios of the numbers of the shortened TTIs on UL and DL, but by increasing one of the ratios (for example, DL ratio) (see FIG. 7).

FIG. 7 illustrates a case where a downlink period (DL shortened TTIs) in which DL transmission is performed is set across different subframes (normal TTI), and an uplink period (UL shortened TTIs) in which UL transmission is performed is set from a midway point of one subframe. Note that, the setting of the DL shortened TTIs and the UL shortened TTIs is not limited to the above case. For example, a UL/DL configuration for a shortened TTI, in which a plurality of UL-DL ratios is defined may be defined in advance. Alternatively, such a configuration may be employed which uses a UL/DL configuration in the existing system to set the DL shortened TTIs to the DL subframe, set the UL shortened TTIs to the UL subframe, and set the DL shortened TTIs and the UL shortened TTIs to a particular subframe.

In a case where, as described above, the UL shortened TTIs and the DL shortened TTIs are set with mutually different ratios in TDD, it becomes a problem how to control the UL transmission of uplink data and/or uplink control information (for example, transmission timing).

Thus, the present inventors, as one aspect of the present embodiments, have conceived to control the UL transmission by using a Slow-DCI received before a predetermined period from a UL shortened TTI, and a Fast-DCI transmitted in a DL shortened TTI included in a normal TTI (subframe) in which the Slow-DCI is transmitted.

Hereinafter, the present embodiments will be described in detail. In the following description, a TTI having a TTI length shorter than 1 ms will be referred to as a shortened TTI, and may be also referred to as a short TTI, a shortened subframe, or a short subframe. Further, a TTI having a time length of 1 ms will be referred to as a normal TTI, and may be also referred to as a long TTI, a usual subframe, a normal subframe, or a long subframe. Further, the configurations shown in FIGs. 1 to 4 may be applied to the shortened TTI according to the present embodiments.

Further, in the following description, downlink control information (DCI) that only user terminals monitor to which the shortened TTIs are set will be referred to as Fast-DCI. Further, DCI specified in the existing systems (or monitored by user terminals of the existing systems) will be referred to as Slow-DCI. Naturally, naming of each DCI is not limited thereto. Further, the application of the present embodiments is not limited to downlink control information (or downlink control channels), and is also optionally applicable to other DL channels.

Further, although, in the following description, in a scheduling control method using the two kinds of DCI, a case is indicated which notifies resource information (such as PRB assignment information) using Fast-DCI, and notifies scheduling information (such as, a transmission instruction), MCS, HARQ information, and the like using Fast-DCI, but the present embodiments are not limited to this case. Any scheduling control method using a plurality of kinds of DCI is optionally applicable. Further, information notified to a user terminal with each DCI is also optionally settable.

Further, a feedback method for uplink control information (for example, HARQ-ACK) in each shortened TTI in the present embodiments is, regardless of the 2-step DCI control, applicable to a scheduling method using one kind (for example, Fast-DCI).

Further, the present embodiments are applicable to any user who is able to communicate using, at least, the shortened TTI. Naturally, the present embodiments are applicable to any user who is able to communicate using, in addition to the shortened TTI, the normal TTI. Further, although, in the following description, the LTE system will be taken as an example, the present embodiments are not limited to this, but are applicable to any system using the shortened TTI. Further, a plurality of aspects described below may be practiced independently to one another, or are also capable of being practiced in combination as needed.

### (First Aspect)

In this first aspect, a case will be described which notifies scheduling control information of an uplink shortened TTI to a user terminal by using Slow-DCI (long cycle DCI) closest to the shortened TTI to be scheduled, and Fast-DCI (short cycle DCI) included in the same normal TTI which includes the Slow-DCI.

Note that in the following description, a case will be described, as an example, which applies TDD (for example, TDD in which the UL ratio and the DL ratio are different from each other) to a shortened TTI, but the present embodiments are not limited to this case. In the case of applying FDD (in UL transmission and/or DL transmission), too, it is possible to control the scheduling in a similar way. Here, in the case of applying FDD, it is preferable to employ a configuration which applies the same shortened-TTI length to UL and DL.

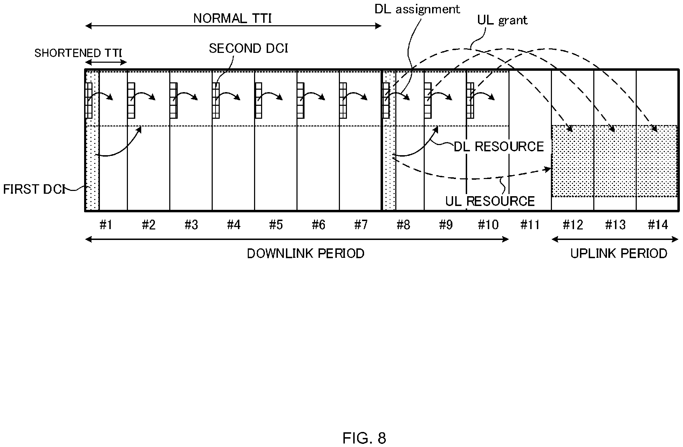

FIG. 8 illustrates a case which performs communication by setting, in two subframes (normal TTI), a downlink period in which DL transmission is performed and an uplink period in which UL transmission is performed. Here, a case is illustrated which includes seven shortened TTIs in the normal TTI, and transmits Fast-DCI in each of the DL shortened TTIs of the downlink period. Further, a case is illustrated which transmits Slow-DCI for each subframe. The Slow-DCI may be constituted by using downlink control information (or an assignment region or transmission timing for existing DCI) in the existing LTE systems (Rel. 12 and before).

FIG. 8 illustrates a case which sets, across mutually different subframes, a downlink period (DL shortened TTIs #1 to #10) in which DL transmission is performed, and sets, from a midway point of one subframe, an uplink period (UL shortened TTIs #12 to #14) in which UL transmission is performed. Further, a case is also illustrated which sets a shortened TTI #11 to a gap period. Naturally, the ratio of UL shortened TTIs and the ratio of DL shortened TTIs in the present embodiments are not limited to the above case.

Further, FIG. 8 illustrates a case which transmits Fast-DCI and Slow-DCI in the leading shortened TTI included in each subframe, but the present embodiments are not limited to this case. For example, it is also possible to employ a configuration in which in a shortened TTI located at the head of the subframe, Fast-DCI is not transmitted, but only Slow-DCI is transmitted.

In the downlink period, the radio base station notifies a user terminal of scheduling control information of a DL and/or UL shortened TTI by using Slow-DCI and Fast-DCI. The scheduling control information of the DL shortened TTI may be configured as the whole of or part of information included in downlink control information (DL assignment) in the existing systems. Further, in addition to information in the existing systems, newly defined information may be added to the Slow-DCI and/or the Fast-DCI. The scheduling control information of the UL shortened TTI may be configured as the whole of or part of information included in downlink control information (a UL grant (such as a DCI format 0/4)) in the existing systems. Further, in addition to information in the existing systems, newly defined information may be added to the Slow-DCI and/or the Fast-DCI.

The user terminal controls the reception of DL signals in the downlink period by using the Slow-DCI and the Fast-DCI. In the case where the downlink period is continuous across a plurality of subframes, DL-signal assignment resources (for example, PRBs) for shortened TTIs may be set in the same region for each subframe (see FIG. 8), or may be set in regions that differ for each subframe. In the case where the DL resources are set in regions that differ for each subframe, with respect to shortened TTIs belonging to each subframe, the user terminal controls the reception of DL signals by using Slow-DCI transmitted in each of the subframes and Fast-DCI transmitted in each shortened TTI. Meanwhile, in the case of setting the same DL resources across the subframes, the user terminal may determine the resources upon reception of the Slow-DCI for each subframe, or may perform reception processing assuming that the Slow-DCI of each subframe designates the same resources.

Further, the radio base station notifies a predetermined user group of assignment information of radio resources (for example, PRBs) used in UL transmission of shortened TTIs with the assignment information being included in the Slow-DCI. Further, the radio base station notifies each user terminal of UL assignment information (such as a UL transmission instruction) in the shortened TTI, MCS, HARQ information, and the like with these kinds of information being included in the Fast-DCI.

In this case, the radio base station notifies each user terminal of the UL scheduling control information with this information being included in a Slow-DCI closest to a shortened TTI in which UL transmission is performed, and in a Fast-DCI included in the same subframe which includes the Slow-DCI. The Slow-DCI closest to a shortened TTI in which the UL transmission is performed means a lastly transmitted Slow-DCI among Slow-DCIs transmitted before the UL shortened TTI (the latest Slow-DCI having being received).

In FIG. 8, UL scheduling control information for UL shortened TTIs #12 to #14 in the uplink period are notified to a user terminal with this information being included in a Slow-DCI transmitted in the same subframe and a Fast-DCI transmitted in DL shortened TTIs (here, DL shortened TTIs #8 to #10) belonging to the subframe.

The user terminal is capable of controlling the UL transmission (for example, uplink data/PUSCH) based on a Slow-DCI closest to the UL shortened TTI, and a Fast-DCI included in the same subframe which includes the Slow-DCI.

In this way, it is possible to reduce the overhead of the Fast-DCI transmitted in each shortened TTI by notifying the UL resource assignment information as information common to a user group with a Slow-DCI. Further, it is possible to suppress latency of UL transmission by controlling the UL transmission based on a Slow-DCI closest to the shortened TTI in which the UL transmission is performed, and a Fast-DCI included in the same subframe which includes the Slow-DCI.

The user terminal is capable of attempting to receive a UL grant in a way that allows the reception of the UL grant only at a region (a Slow-DCI region) to which the Slow-DCI, in which the UL scheduling control information is transmitted, is assigned, and at a region (a Fast-DCI region) to which the Fast-DCI is assigned. The subframe (normal TTI) and/or the shortened TTI in which the UL scheduling control information is transmitted may be defined in advance, or may be configured to be notified from the radio base station to each user terminal by higher-layer signaling or the like. Alternatively, the user terminal may be configured to detect a Slow-DCI in each subframe and attempt to receive a UL grant (Fast-DCI) that is transmitted in the shortened TTI, only when the Slow-DCI includes UL resource assignment information.

Note that, FIG. 8 illustrates an example of a case where the uplink period and the downlink period belong to the same subframe, but similarly, this is applicable to a case where the uplink period and the downlink period belong to different subframes, respectively. Further, although a case where seven shortened TTIs are set in one subframe (for example, one shortened TTI is composed of two symbols) is illustrated, the setting number of the shortened TTIs may be optionally changed.

### <Uplink Control Information Feedback>

In the case of employing TDD using the shortened TTI (for example, TDD in which the UL rate and the DL rate are different from each other), it becomes a problem how to control the transmission timing of HARQ-ACK (A/N) to the DL transmission in each shortened TTI (for example, downlink data/PDSCH).

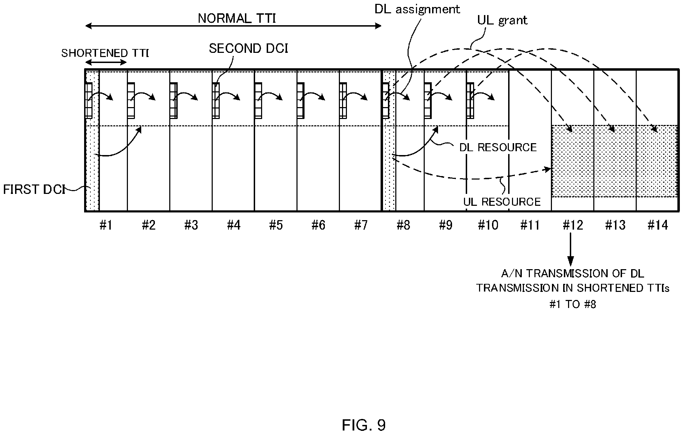

The present embodiment performs control so as to feed back A/N to DL data (for example, PDSCH) transmitted in the DL shortened TTI of the downlink period at a first timing at which uplink data (for example, PUSCH) in a shortened TTI is scheduled. For example, a user terminal performs control so as to transmit A/Ns to DL transmissions before the DL shortened TTI in which a UL grant (Fast-DCI) in a first UL shortened TTI of the uplink period is transmitted, by using the first UL shortened TTI (see FIG. 9).

In FIG. 9, through the use of a first UL shortened TTI #12 of the uplink period, the user terminal feeds back A/Ns to the DL transmissions in DL shortened TTIs #1 to #8 (corresponding to the DL shortened TTIs #8 and before, in each of which the UL grant is transmitted). Further, the user terminal feeds back A/N to the DL transmission in a DL shortened TTI #9 by a UL shortened TTI #13, and feeds back A/N to the DL transmission in a DL shortened TTI #10 by a UL shortened TTI #14.

In this way, it is possible to obtain a latency reduction effect by feeding back A/N to the DL transmissions in a plurality of DL shortened TTIs of the downlink period by using a first UL shortened TTI of the uplink period t.

Further, when there is a transmission instruction of uplink data (PUSCH transmission) in a first UL shortened TTI of the uplink period, the user terminal is capable of transmitting uplink control information (UCI), such as A/N, with the uplink control information being included in PUSCH. In contrast, when there is no transmission instruction of uplink data in the first UL shortened TTI of the uplink period, the user terminal is capable of transmitting uplink control information, such as A/N, on an uplink control channel (for example, PUCCH).

Here, FIG. 9 illustrates a case of feeding back A/N in response to the DL shortened TTIs before a predetermined period, at a first timing (UL shortened TTI #12) of the uplink period, but the present embodiments are not limited to this case. For example, the uplink control information (for example, A/N) may be fed back by using a first UL shortened TTI in which there is actually an UL transmission instruction, among the UL shortened TTIs included in the uplink period.

Alternatively, in the case where the downlink period is continuous across a plurality of subframes, the user terminal may feed back A/Ns to the DL transmissions in respective DL shortened TTIs in a predetermined UL shortened TTI (for example, different UL shortened TTI) by aggregating the A/Ns for each subframe. Alternatively, the user terminal may perform the feedback by bundling A/Ns in response to a plurality of DL shortened TTIs to be bundled and aggregated, for each predetermined unit (for example, for each subframe), and aggregating them into a predetermined UL shortened TTI (for example, a first UL shortened TTI of the uplink period). This makes it possible to suppress the overheads of simultaneously transmitted HARQ-ACKs even when the downlink period continues long.

Additionally, the feedback method of uplink control information (for example, A/N) in each UL shortened TTI is, regardless of the 2-step DCI control, applicable to a scheduling method using only one kind (for example, Fast-DCI).

### (Second Aspect)

In this second aspect, a case is described which notifies a user terminal of scheduling control information of a UL shortened TTI by using a Slow-DCI before a predetermined period from the UL shortened TTI to be scheduled, and a Fast-DCI included in the same subframe which includes the Slow-DCI. In this case, a radio base station is capable of respectively designating UL resources in respective UL shortened TTIs by using a plurality of pieces of Slow-DCI.

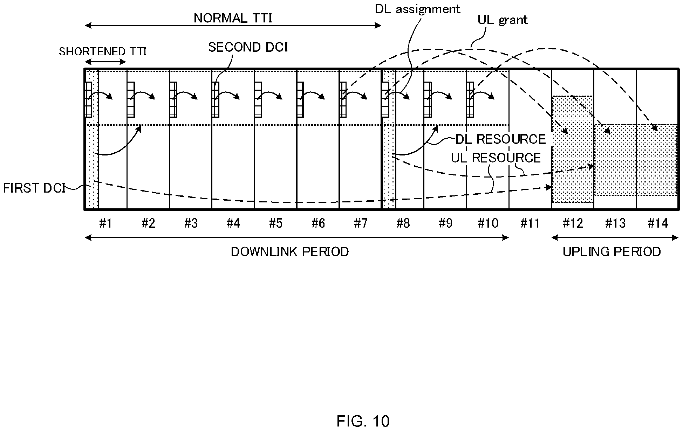

The radio base station is capable of notifying the user terminal of scheduling control information of UL shortened TTI with the scheduling control information being included in a Slow-DCI before a predetermined period from the UL shortened TTI, and a Fast-DCI included in the same subframe which includes the Slow-DCI (see FIG. 10). Here, with respect to a UL shortened TTI that is a part of the uplink period (for example, a leading UL shortened TTI #12), scheduling control information of the UL is notified to the user terminal with the scheduling control information being included in a Slow-DCI located second closest to the UL shortened TTI #12, and a Fast-DCI transmitted in a DL shortened TTI #7 that is included in the same subframe which includes the Slow-DCI.

Meanwhile, with respect to another UL shortened TTI of the uplink period (for example, UL shortened TTI #13 or #14), scheduling control information of the UL is notified to the user terminal with the scheduling control information being included in a Slow-DCI located closest to the UL shortened TTI and a Fast-DCI included in the same subframe which includes the Slow-DCI. In this case, it is possible to designate mutually different UL resources (for example, PRBs) by using a plurality of pieces of Slow-DCI. That is, it is possible to set different UL resources (for example, PRBs) among a plurality of UL shortened TTIs included in the uplink period.

The user terminal controls the transmission of uplink data/PUSCH in the UL shortened TTI #12 based on a Slow-DCI transmitted in the DL shortened TTI #1 and a Fast-DCI transmitted in the DL shortened TTI #7, which is included in the same subframe which includes the Slow-DCI. Further, the user terminal controls the transmission of uplink data/PUSCH in the UL shortened TTI #13 (#14) based on a Slow-DCI transmitted in the DL shortened TTI #8 and a Fast-DCI transmitted in the DL shortened TTI #8 (#10), which is included in the same sub frame which includes the Slow-DCI.

In this way, it is possible to assign different UL resources among the UL shortened TTIs included in the same subframe (or the same uplink period) and to perform UL transmissions, by using a plurality of pieces of Slow-DCI to designate the UL resources.

Further, the user terminal may be configured to attempt to receive a UL grant only at a region (a Slow-DCI region) to which a Slow-DCI, in which the UL scheduling control information is transmitted, is assigned, and at a region (a Fast-DCI region) to which a Fast-DCI is assigned.

FIG. 10 illustrates an example of a case where the uplink period and the downlink period belong to the same subframe, but, even in a case where the uplink period and the downlink period belong to mutually different subframes, respectively, the above case is similarly applicable. Further, although a case is illustrated which sets seven shortened TTIs to one subframe (for example, one shortened TTI is composed of two symbols), the setting number of the shortened TTIs may be optionally changed.

### <Uplink Control Information Feedback>

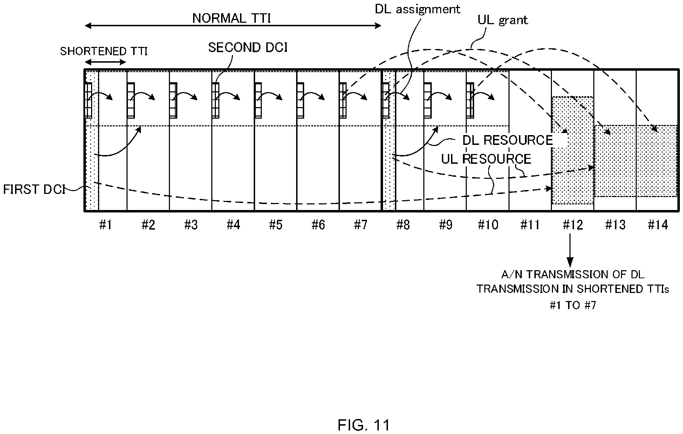

As shown in FIG. 11, in the case of controlling the UL transmissions with respect to UL shortened TTIs included in the uplink period (or the same subframe) with mutually different pieces of Slow-DCI (or pieces of Fast-DCI belonging to mutually different subframes), a user terminal transmits A/Ns at a predetermined timing. For example, the user terminal performs control so as to transmit A/Ns in response to the DL transmissions before the shortened TTI #7 in which a UL grant (Fast-DCI) for the UL shortened TTI #12 is transmittable, by using a first shortened TTI #12 of the uplink period, allows (see FIG. 11).

In FIG. 11, the user terminal feeds back A/Ns in response to the DL transmissions in DL shortened TTIs #1 to #7, by the first UL shortened TTI #12 of the uplink period. Further, the user terminal feeds back A/Ns in response to the DL transmissions in DL shortened TTIs #8 and #9, in a UL shortened TTI #13, and feeds back A/N in response to the DL transmission in a DL shortened TTI #10, in a UL shortened TTI #14.

In this way, it is possible to obtain a latency reduction effect by feeding back A/Ns in response to the DL transmissions in a plurality of DL shortened TTIs of the downlink period by using a first UL shortened TTI of the uplink period.

Further, in FIG. 11, A/Ns respectively corresponding to the shortened TTIs #1 to #7, which belong to the first subframe, are transmitted using the UL shortened TTI #12, and A/Ns corresponding to the shortened TTIs #8 and #9, which belong to the second subframe, are transmitted using the UL shortened TTIs #13 and #14, respectively. Note that, the first subframe is composed of DL shortened TTIs, and the second subframe is composed of DL shortened TTIs and UL shortened TTIs.

In this way, it is possible to secure a larger period of time needed for HARQ processing, by separately setting UL shortened TTIs used for A/N feedbacks corresponding to DL shortened TTIs in each subframe. This makes it possible to reduce the load on the user terminal.

Note that, the feedback method of uplink control information (for example, A/N) in each UL shortened TTI is, regardless of the 2-step DCI control, applicable to a scheduling method using only one kind (for example, Fast-DCI).

### (Radio Communication System)

Hereinafter, the configuration of a radio communication system according to an embodiment of the present invention will be described. In this radio communication system, the radio communication methods according to the respective aforementioned aspects are applied. Note that, the radio communication methods according to the respective aforementioned aspects may be applied independently to one another, or may be applied in combination.

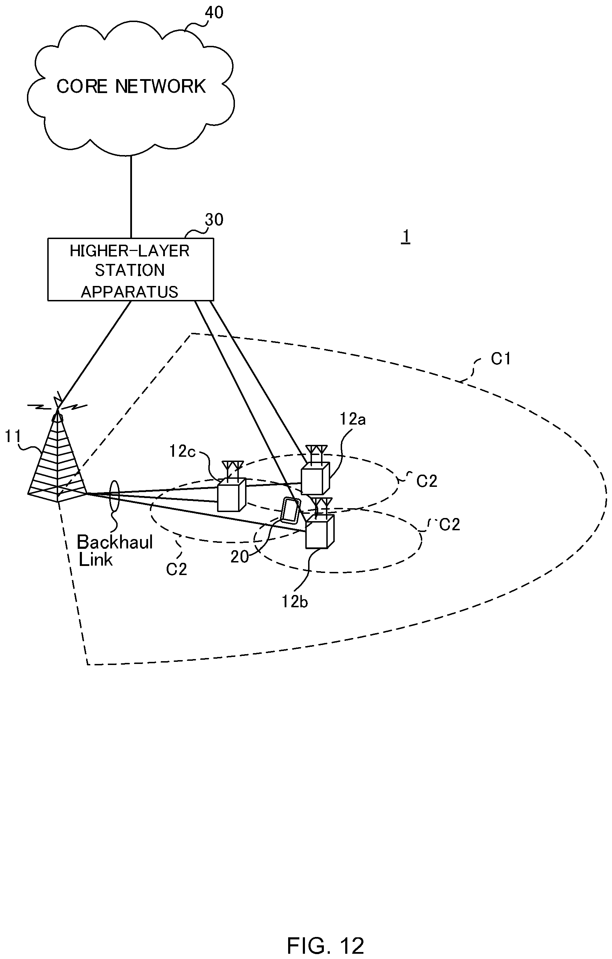

FIG. 12 is a diagram illustrating an example of the schematic configuration of a radio communication system according to an embodiment of the present invention. It is possible for a radio communication system 1 to employ carrier aggregation (CA) for aggregating a plurality of basic frequency blocks (component carriers) with a system bandwidth (for example, 20 MHz) of the LTE system as one unit, and/or dual connectivity (DC). Note that, the radio communication system 1 may be called SUPER 3G, LTE-A (LTE-Advanced), IMT-Advanced, 4G, 5G, FRA (Future Radio Access), or the like.

The radio communication system 1 shown in FIG. 12 includes a radio base station 11 that forms a macro cell C1 and radio base stations 12a to 12c each of which is disposed in the macro cell C1 and forms a small cell C2 which is smaller than the macro cell C1. Further, a user terminal 20 is disposed in the macrocell C1 and in each of the small cells C2. It may be configured such that numerologies different among cells are employed. Note that, the numerology means a set of communication parameters that feature the design of signals in a certain RAT, or the design of the certain RAT.

The user terminal 20 is capable of connecting to both of the radio base station 11 and one of the radio base stations 12. The user terminal 20 is supposed to simultaneously use the macro cell C1 and the small cell C2 which use mutually different frequencies, by CA or DC. Further, the user terminal 20 is capable of employing CA or DC using a plurality of cells (CCs) (for example, six or more CCs). Further, the user terminal is capable of using licensed band CCs and unlicensed band CCs as the plurality of cells. Note that, a configuration may be adopted in which any of the plurality of cells includes TDD carriers to which the shortened TTIs are applied.

The communication between the user terminal 20 and the radio base station 11 can be performed using a relatively low frequency band (for example, 2 GHz) and carriers each having a narrow bandwidth (called an existing carrier, a legacy carrier or the like). Meanwhile, the communication between the user terminal 20 and each of the radio base stations 12 may be performed using a relatively high frequency band (for example, 3.5 GHz or 5 GHz), and carriers each having a wide bandwidth, or may be performed using the same carriers as those used for the communication between the user terminal 20 and the radio base station 11. Here, the configuration of the frequency band used by each of the radio base stations is not limited to this configuration.

A configuration may be adopted that uses a wired connection (such as an optical fiber interface conforming to Common Public Radio Interface (CPRI) or X2 interface) or a wireless connection between the radio base station 11 and each of the radio base stations 12 (or between any two of the radio base stations 12).

Each of the radio base station 11 and the radio base stations 12 is connected to a higher-layer station apparatus 30, and is connected to a core network 40 via the higher-layer station apparatus 30. Note that, the higher-layer station apparatus 30 includes, but not limited to, an access gateway device, a radio network controller (RNC), and a mobility management entity (MME), for example. Further, each of the radio base stations 12 may be connected to the higher-layer station apparatus 30 via the radio base station 11.

Note that, the radio base station 11 is a radio base station having a relatively wide coverage, and may be called a macro base station, an aggregate node, an e-Node B (eNB), a transmission/reception point, or the like. Further, each of the radio base stations 12 is a radio base station having a local coverage, and may be called a small base station, a micro base station, a pico base station, a femto base station, a home e-Node B (HeNB), a remote radio head (RRH), a transmission/reception point, or the like. Hereinafter, in the case of not distinguishing between the radio base stations 11 and 12, the stations are collectively referred to as a radio base station 10.

Each user terminal 20 is a terminal conforming to various communication schemes, such as LTE and LTE-A, and may include not only a mobile communication terminal, but also a fixed communication terminal.

In the radio communication system 1, as radio access schemes, an orthogonal frequency division multiple access (OFDMA) is applied to the downlink, and a single-carrier frequency division multiple access (SC-FDMA) is applied to the uplink. OFDMA is a multi-carrier transmission scheme which performs communication by dividing a frequency band into a plurality of narrow frequency bands (subcarriers), and mapping data to each of the subcarriers. SC-FDMA is a single-carrier transmission scheme which reduces interferences among terminals by dividing a system bandwidth into bands each composed of one or contiguous resource blocks for each terminal to allow a plurality of terminals to use mutually different bands,. Note that, the radio access schemes for the uplink and the downlink are not limited to this combination, and OFDMA may be used in the uplink.

In the radio communication system 1, downlink channels, such as a downlink shared channel (PDSCH: Physical Downlink Shared Channel) that is shared by the user terminals 20, a broadcast channel (PBCH: Physical Broadcast Channel), and a downlink L1/L2 control channel, are used. User data, higher-layer control information, system information blocks (SIBs), and the like are transmitted on PDSCH. Further, master information blocks (MIBs) are transmitted on PBCH.

The L1/L2 control channel includes a downlink control channel (a physical downlink control channel (PDCCH) and an enhanced physical downlink control channel (EPDCCH)), a physical control format indicator channel (PCFICH), a physical hybrid-arq indicator channel (PHICH), and the like. Downlink control information (DCI) including scheduling information for PDSCH and PUSCH, and the like are transmitted on PDCCH. The number of OFDM symbols used in PDCCH is transmitted on PCFICH. Receipt confirmation information (ACK/NACK) of HARQ for PUSCH is transmitted on PHICH. EPDCCH is frequency-division multiplexed with PDSCH (downlink shared data channel), and is used for the transmission of the DCI and the like similarly to PDCCH.

In the radio communication system 1, uplink channels, such as an uplink shared channel (PUSCH: Physical Uplink Shared Channel) that is shared by the user terminals 20, an uplink control channel (PUCCH: Physical Uplink Control Channel), and a random access channel (PRACH: Physical Random Access Channel), are used. User data and higher-layer control information are transmitted on PUSCH. Uplink control information (UCI) including at least one of the receipt confirmation information (ACK/NACK), radio quality information (CQI), and the like is transmitted on PUSCH or PUCCH. Random access preamble for establishing a connection to a cell is transmitted on PRACH.

### <Radio Base Station>

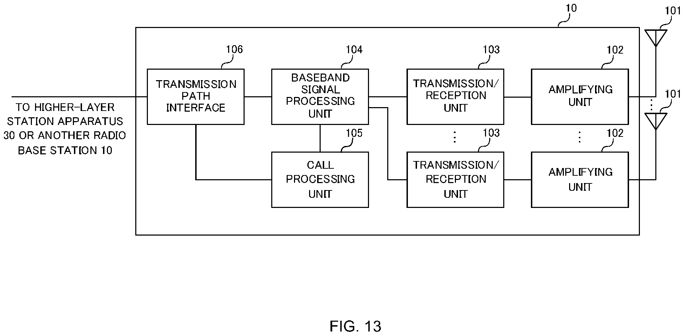

FIG. 13 is a diagram illustrating an example of the whole configuration of a radio base station according to an embodiment of the present invention. A radio base station 10 includes a plurality of transmission/reception antennas 101, a plurality of amplifying units 102, a plurality of transmission/reception unit 103, a baseband signal processing unit 104, a call processing unit 105, and a transmission path interface 106. Here, each of the transmission/reception units 103 includes a transmission unit and a reception unit.

User data transmitted from the radio base station 10 to the user terminal 20 on a downlink link is input to the baseband signal processing unit 104 from the higher-layer station apparatus 30 via the transmission path interface 106.

The baseband signal processing unit 104 performs, on user data, transmission processing, such as a PDCP (Packet Data Convergence Protocol) layer process, RLC (Radio Link Control) layer transmission processes, such as division/combination of user data and an RLC retransmission control, MAC (Medium Access Control) retransmission control (for example, a HARQ (Hybrid Automatic Repeat reQuest) transmission process), scheduling, a transmission format selection, channel coding, an Inverse Fast Fourier Transform (IFFT) process, and a precoding process, and then transfers the user data to each of the transmission/reception units 103. Further, the baseband signal processing unit 104 performs, also on a downlink control signal, transmission processing, such as channel coding, and an inverse fast Fourier transform, then transfers the downlink control signal to each of the transmission/reception units 103.

Each of the transmission/reception units 103 converts a baseband signal, which is subjected to precoding for each antenna and is output from the baseband signal processing unit 104, into a signal with a radio frequency band, and then transmits the signal. The radio frequency band signals frequency-converted in the transmission/reception units 103, are amplified by the amplifying units 102, and then transmitted from the transmission/reception antennas 101.

Meanwhile, with respect to an uplink signal, radio frequency band signals received by the transmission/reception antennas 101 are amplified by the amplifying units 102. The transmission/reception units 103 receive the uplink signals that are amplified by the amplifying units 102. The transmission/reception units 103 frequency-convert received signals into baseband signals, and then outputs the baseband signals to the baseband signal processing unit 104.

The transmission/reception units (transmission units) 103 transmit, for each of first TTIs (for example, the normal TTIs), first downlink control information (for example, Slow-DCI), and transmit second downlink control information (for example, Fast-DCI) in each of second TTIs (for example, the shortened TTIs). Each of the transmission/reception units (reception units) 103 receives a UL signal that a user terminal transmits in a second TTI based on the first control information and the second control information. Further, each of the transmission/reception units (transmission unit) 103 may transmit, to each user terminal, information on shortened TTIs to be set for the UL transmission, and shortened TTIs to be set for the DL transmission (for example, a UL/DL configuration for shortened TTIs, or the ratio between the UL shortened TTIs and the DL shortened TTIs),.

Each of the transmission/reception units 103 may be constituted by a transmitter/receiver, a transmission/reception circuit, or a transmission/reception device that is described based on a common recognition in a technical field according to the present invention. Note that, each of the transmission/reception units 103 may be constituted as an integrated transmission/reception unit, or may be constituted by a transmission unit and a reception unit.

The baseband signal processing unit 104 performs, on user data included in an input uplink signal, reception processing, such as fast Fourier transform (FFT) processing, inverse discrete Fourier transform (IDFT) processing, error correction decoding, and MAC retransmission control, and reception processing on an RLC layer and a PDCP layer, and then transfers the user data to the higher-layer station apparatus 30 via the transmission path interface 106. The call processing unit 105 performs call processing, such as setting/release of each communication channel, status management of the radio base station 10, and management of radio resources.

The transmission path interface 106 transmits/receives signals to/from the higher-layer station apparatus 30 via a predetermined interface. Further, the transmission path interface 106 may perform the transmission/reception of signals (may perform backhaul signaling) with an adjacent radio base station device 10 via an inter-base station interface (for example, optical fiber interface conforming to CPRI (Common Public Radio Interface) or X2 interface).

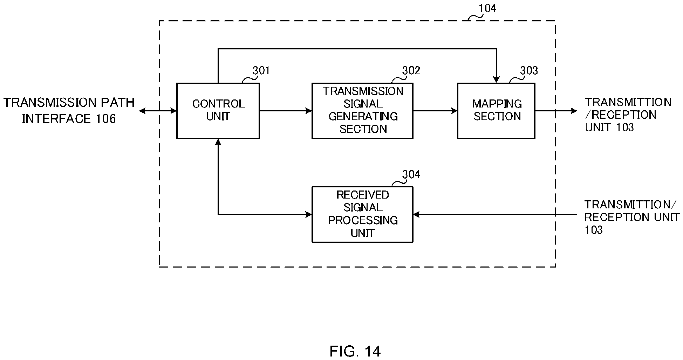

FIG. 14 is a diagram illustrating an example of the function configuration of a radio base station according to the present embodiment. Note that, in FIG. 14, the function blocks of a feature portion of the present embodiment are mainly illustrated, and the radio base station 10 is supposed to include other function blocks needed for the radio communication. As shown in FIG. 14, the base band signal processing unit 104 includes a control unit (scheduler) 301, a transmission signal generation unit (generation unit) 302, a mapping unit 303, and a received signal processing unit 304.

The control unit (scheduler) 301 controls a downlink data signal transmitted on PDSCH, and scheduling (for example, the resource assignment) for a downlink control signal transmitted on PDCCH and/or EPDCCH. Further, the control unit (scheduler) 301 also controls scheduling for system information, a synchronization signal, paging information, CRS (Cell-specific Reference Signal), CSI-RS (Channel State Information Reference Signal), and the like. Moreover, the control unit (scheduler) 301 controls scheduling for an uplink data signal transmitted on PUSCH, an uplink control signal transmitted on PUCCH and/or PUSCH, and the like.

The control unit 301 is capable of controlling the transmission/reception of the transmission/reception unit 103. For example, the control unit 301 controls scheduling for a UL signal by using first downlink control information transmitted before a predetermined period from a UL shortened TTI in which the UL signal is transmitted, and second downlink control information included in a subframe in which the first downlink control information is transmitted (see FIGs. 8 and 10). The control unit 301 may be constituted by a controller, a control circuit, or a control device that is described based on a common recognition in a technical field according to the present invention.

The transmission signal generation unit 302 generates a DL signal (including the downlink data signal and the downlink control signal) based on an instruction from the control unit 301, and outputs the DL signal to the mapping unit 303. Specifically, the transmission signal generation unit 302 generates downlink data signals (PDSCH) including user data, and outputs the downlink data signals to the mapping unit 303. Further, the transmission signal generation unit 302 generates downlink control signals (PDCCH/EPDCCH) including Slow-DCI and/or Fast-DCI (UL grants), and outputs the downlink control signals to the mapping unit 303. Moreover, the transmission signal generation unit 302 generates downlink reference signals, such as CRS and CSI-RS, and outputs the downlink reference signals to the mapping unit 303.

The mapping unit 303 performs mapping of the DL signals generated by the transmission signal generation unit 302 onto predetermined radio resources based on an instruction from the control unit 301, and outputs resultant signals to the transmission/reception unit 103. The mapping unit 303 may be constituted by a mapper, a mapping circuit, or a mapping device that is described based on a common recognition in a technical field according to the present invention.

The received signal processing unit 304 performs reception processing (such as de-mapping, demodulation, and decoding) on UL signals (such as HARQ-ACK and PUSCH) transmitted from the user terminal 20. The processing result is output to the control unit 301. The received signal processing unit 304 may be constituted by a signal processor, a signal processing circuit, or a signal processing device, as well as a measurement tool, a measurement circuit, or a measurement device that are described based on a common recognition in a technical field according to the present invention.

### <User Terminal>

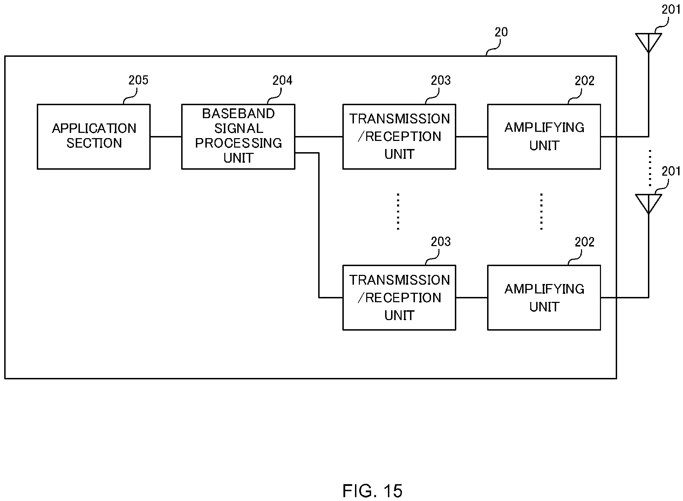

FIG. 15 is a diagram illustrating an example of a whole configuration of a user terminal according to an embodiment of the present invention. The user terminal 20 includes a plurality of transmission/reception antennas 201 for use in MIMO transmission, a plurality of amplifying units 202, a plurality of transmission/reception units 203, a baseband signal processing unit 204, and an application unit 205. Note that, the transmission/reception unit 203 may be constituted by a transmission unit and a reception unit. Further, the user terminal 20 is simply required to have at least a communication capability using the shortened TTIs, and may be a user terminal that performs communication using both of the normal TTIs and the shortened TTIs.

Radio frequency signals received by the plurality of transmission/reception antennas 201 are each amplified by the corresponding amplifying units 202. Each of the transmission/reception units 203 receives a downlink signal having been amplified by a corresponding one of the amplifying units 202. Each of the transmission/reception units 203 frequency-converts a received signal into a baseband signal, and outputs the baseband signal to the baseband signal processing unit 204.

Each of the transmission/reception units (reception units) 203 receives the first downlink control information (for example, Slow-DCI), which is transmitted in a first TTI (for example, normal TTI), and the second downlink control information (for example, Fast-TTI), which is transmitted in a second TTI (for example, shortened TTI). Further, each of the transmission/reception units (transmission units) 203 controls UL transmission (for example, PUSCH transmission) in a second TTI based on the first control information and the second control information. Moreover, each of the transmission/reception units (transmission units) 203 transmits HARQ-ACK in response to the DL transmission in each of DL shortened TTIs.

Furthermore, each of the transmission/reception units (reception units) 203 may receive information on a shortened TTI to be set for the UL transmission and a shortened TTI to be set for the DL transmission (for example, a UL/DL configuration for shortened TTIs or the ratio between the UL shortened TTIs and the DL shortened TTIs). Each of the transmission/reception units 203 may be constituted by a transmitter/receiver, a transmission/reception circuit, or a transmission/reception device that is described based on a common recognition in a technical field according to the present invention.

The baseband signal processing unit 204 performs reception processing, such as FFT processing, error correction decoding, and retransmission control on an input baseband signal. Downlink user data is transferred to the application unit 205. The application unit 205 performs processing in relation to a layer higher than a physical layer and a MAC layer. Further, broadcast information among the downlink data is also transferred to the application unit 205.

Meanwhile, uplink user data is input to the baseband signal processing unit 204 from the application unit 205. The baseband signal processing unit 204 performs, on the uplink user data, processing, such as transmission processing for retransmission control (for example, transmission processing for HARQ), channel coding, precoding, discrete Fourier transform (DFT) processing, and IFFT processing, and then transfers resultant uplink user data to each of the transmission/reception units 203. Each of the transmission/reception units 203 converts a baseband signal output from the baseband signal processing unit 204 into a signal with a radio frequency band, and transmits the signal. The radio frequency signals frequency-converted by the transmission/reception units 203 are amplified by the amplifying units 202, and then transmitted from the transmission/reception antennas 201.

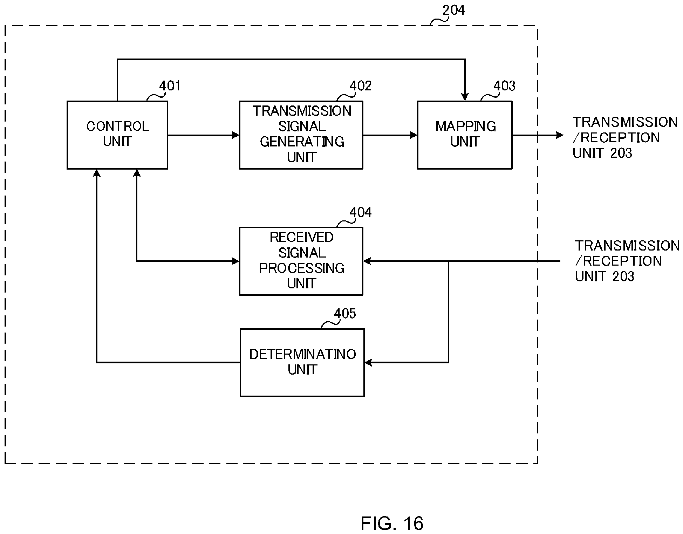

FIG. 16 is a diagram illustrating an example of the function configuration of a user terminal according to the present embodiment. Note that, in FIG. 16, the function blocks of a feature portion of the present embodiment are mainly illustrated, and the user terminal 20 is supposed to include other function blocks needed for the radio communication. As shown in FIG. 16, the baseband signal processing unit 204 of the user terminal 20 includes a control unit 401, a transmission signal generation unit 402, a mapping unit 403, a received signal processing unit 404, and a determination unit 405.

The control unit 401 acquires a downlink control signal transmitted from the radio base station 10 (a signal transmitted on PDCCH/EPDCCH) and a downlink data signal (a signal transmitted on PDSCH), from the received signal processing unit 404. The control unit 401 controls the generation of uplink control signals (such as a receipt confirmation signal (HARQ-ACK)) and the generation of uplink data signals based on the downlink control signal, the result of a determination as to whether or not the retransmission control on the downlink data signal is needed, and the like. Specifically, the control unit 401 is capable of controlling the transmission signal generation unit 402, the mapping unit 403, and the received signal processing unit 404.

The control unit 401 controls the UL transmission in a second TTI based on the first control information and the second control information, which have been transmitted from a radio base station. For example, the control unit 401 controls the UL transmission by using first downlink control information received before a predetermined period from a second TTI in which the UL transmission is performed, and second downlink control information included in a first TTI in which the first downlink control information is transmitted (see FIGs. 8 and 10).

In this case, the control unit 401 may control the UL transmission based on lastly transmitted first control information among pieces of first control information transmitted before a second TTI in which the UL transmission is performed (see FIG. 8). Note that, a configuration may be adopted in which the second TTI, in which the UL transmission is performed, is included in a first TTI in which the first control information, which instructs the UL transmission in the second TTI, is transmitted.

Alternatively, in the case of performing the UL transmissions using a plurality of second TTIs included in the first TTI (or an uplink period), the control unit 401 may determine a UL assignment resource for each of the second TTIs based on at least two or more different pieces of first downlink control information (see FIG. 10).

Further, the control unit 401 may perform control so as to selectively receive a UL grant with respect to a first control information assignment region and/or a second control information assignment region, in which scheduling control information for UL transmission in a second TTI is transmitted.

Further, the control unit 401 performs control so as to transmit at least part of a plurality of HARQ-ACKs respectively corresponding to DL transmissions in a plurality of second TTIs included in a DL transmission period, in a leading second TTI in a UL transmission period (see FIGs. 9 and 11). In this case, at least part of the plurality of HARQ-ACKs may be used as HARQ-ACKs in response to DL transmissions received in second TTIs before second TTIs in which second downlink control information for instructing the UL transmission in the leading second TTI is transmitted.

Further, the control unit 401 may control the communication by using TDD in which the ratio of the shortened TTIs used in the UL transmission and the ratio of the shortened TTIs used in the DL transmission are different from each other. The control unit 401 may be constituted by a controller, a control circuit, or a control device that is described based on a common recognition in a technical field according to the present invention.

The transmission signal generation unit 402 generates UL signals based on an instruction from the control unit 401, and outputs the generated UL signals to the mapping unit 403. For example, the transmission signal generation unit 402 generates uplink control signals, such as a receipt confirmation signal (HARQ-ACK) and channel status information (CSI).

Further, the transmission signal generation unit 402 generates uplink data signals based on an instruction from the control unit 401. For example, when a UL grant is included in a downlink control signal notified from the radio base station 10, the transmission signal generation unit 402 is instructed to generate uplink data signals by the control unit 401. The transmission signal generation unit 402 may be constituted by a signal generator, a signal generation circuit, or a signal generation device based on a common recognition in a technical field according to the present invention.

The mapping unit 403 performs mapping, to radio resources, the uplink signals (the uplink control signals and/or the uplink data) generated by the transmission signal generation unit 402, based on an instruction from the control unit 401, and outputs resultant signals to the transmission/reception unit 203. The mapping unit 403 may be constituted by a mapper, a mapping circuit, or a mapping device based on a common recognition in a technical field according to the present invention.

The received signal processing unit 404 performs reception processing (such as de-mapping, demodulation, and decoding) on DL signals (such as a downlink control signal transmitted from a radio base station and a downlink data signal transmitted on PDSCH). The received signal processing unit 404 outputs information received from the radio base station 10 to the control unit 401 and the determination unit 405. The received signal processing unit 404 outputs information, such as broadcast information, system information, RRC signaling, and DCI, to the control unit 401.

The received signal processing unit 404 may be constituted by a signal processor, a signal processing circuit, or a signal processing device, as well as a measure, a measurement circuit, or a measurement device, based on a common recognition in a technical field according to the present invention. Further, the received signal processing unit 404 is capable of constituting a reception unit according to the present invention.

The determination unit 405 performs a retransmission control determination (ACK/NACK) based on the result of the decoding by the received signal processing unit 404, and outputs a determination result to the control unit 401. In the case where a downlink signal (PDSCH) is transmitted through each of a plurality of CCs (for example, six or more CCs) is transmitted, the determination unit 405 is capable of performing the retransmission control determination (ACK/NACK) on each of the CCs, and outputting a determination result to the control unit 401. The determination unit 405 may be constituted by a determination circuit or a determination device based on a common recognition in a technical field according to the present invention.

### (Hardware Configuration)

Note that, the block diagram used in the description of the above embodiments illustrates function-based blocks. These function blocks (constitution units) are realized by optionally combining hardware and/or software. Further, the method of realizing each of the function blocks is not particularly limited. That is, each of the function blocks may be realized by one physically integrated device, or may be realized by two or more physically separated devices that are connected to one another in a wired or wireless manner.

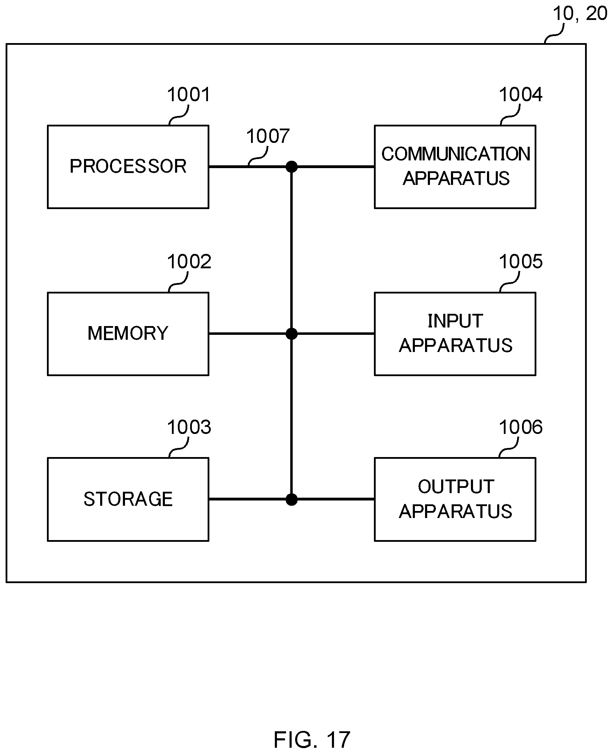

For example, each of a radio base station, a user terminal, and the like in an embodiment of the present invention may function as a computer that performs processing in accordance with the radio communication method of the present invention. FIG. 17 is a diagram illustrating a hardware configuration example of each of a radio base station and a user terminal according to an embodiment of the present invention. Each of the above radio base station 10 and user terminal 20 may be physically constituted as a computer apparatus including a processor 1001, a memory 1002, a storage 1003, a communication apparatus 1004, an input apparatus 1005, an output apparatus 1006, a bus 1007, and the like.

Note that, in the following description, a term "apparatus" is allowed to read as a circuit, a device, a unit, or the like. The hardware configuration of each of the radio base station 10 and the user terminal 20 may be made such that the hardware configuration encompasses one or more of apparatuses shown in FIG. 17 or does not encompass part of the apparatuses.

The individual functions of each of the radio base station 10 and the user terminal 20 are executed by allowing predetermined software (programs) to be read onto hardware components, such as the processor 1001 and the memory 1002, to allow the processor 1001 to carry out arithmetic operation and perform control of communication by the communication apparatus 1004, and reading and/or writing of data in the memory 1002 and the storage 1003.

The processor 1001 controls the entire computer by allowing, for example, an operating system to operate. The processor 1001 may be constituted by a central processing unit (CPU) including interfaces with peripheral apparatuses, control device, an arithmetic processing apparatus, registers, and the like. For example, the above baseband signal processing unit 104 (204), call processing unit 105, and the like may be realized by the processor 1001.

Further, the processor 1001 reads programs (program codes), software modules, and data from the storage 1003 and/or the communication apparatus 1004 into the memory 1002, and executes various processes in accordance with the programs (program codes), the software modules, and the data. With respect to the programs, programs that allow a computer to execute at least part of the operations having been described in the above embodiments are employed. For example, the control unit 401 of the user terminal 20 may be realized by a control program that is stored in the memory 1002 and is executed by the processor 1001, and other function blocks may be also realized in the same way.

The memory 1002 is a computer-readable recording medium, and may be constituted by at least one of, for example, ROM (Read Only Memory), EPROM (erasable Programmable ROM), and RAM (Random Access Memory). The memory 1002 may be called a resistor, a cache, a main memory (main storage apparatus), or the like. The memory 1002 is capable of storing therein programs (program codes), software modules, and the like that are executable to practice radio communication methods according to an embodiment of the present invention.

The storage 1003 is a computer-readable recording medium, and may be constituted by at least one of, for example, an optical disc, such as CD-ROM (Compact Disc ROM), a hard disc drive, a flexible disc, a magneto-optical disk, and a flash memory. The storage 1003 may be also called an auxiliary storage apparatus.

The communication apparatus 1004 is a hardware component (transmission/reception device) to perform computer-to-computer communication via wired and/or wireless networks, and is called, for example, a network device, a network controller, a network card, or a communication module. For example, the above transmission/reception antennas 101 (201), amplifier units 102 (202), transmission/reception units 103 (203), and transmission path interface 106 may be constituted by the communication apparatus 1004.

The input apparatus 1005 is an input device (such as a keyboard or a mouse) that receives inputs from the outside. The output apparatus 1006 is an output device (such as a display or a speaker) that performs outputting to the outside. Here, the input apparatus 1005 and the output apparatus 1006 may be an integrated component (for example, a touch panel).

Further, the individual apparatuses, such as the processor 1001 and the memory 1002, are connected to one another via the bus 1007 to communicate information. The bus 1007 may be constituted by a single bus, or may be constituted by mutually different buses between apparatuses.

Further, each of the radio base station 10 and the user terminal 20 may be configured to include hardware components, such as a microprocessor, a DSP (Digital Signal Processor), an ASIC (Application Specific Integrated Circuit), a PLD (Programmable Logic Device), an FPGA (Field Programmable Gate Array), and each of the function blocks may be constituted by part of or the whole of these hardware components. For example, the processor 1001 may be constituted by at least one of these hardware components.

Note that, a term having been described in the Description and/or a term needed for the understanding of the Description may be each replaced with a term having the same meaning or a similar meaning. For example, "channel" and/or "symbol" may be replaced by "signaling". Further, "signaling" may be replaced by "message". Further, the component carrier (CC) may be called a cell, a frequency carrier, a carrier frequency, or the like.

Further, a radio frame may be constituted by one or more frames in the time domain. Each of the one or more frames constituting the radio frame may be called a subframe. Moreover, the subframe may be constituted by one or more slots in the time domain. Furthermore, the slot may be constituted by one or more symbols (such as OFDM symbols or SC-FDMA symbols) in the time domain.

Any one of the radio frame, the subframe, the slot, and the symbol represents a temporal unit for use in the transmission of a signal. Each of the radio frame, the subframe, the slot, and the symbol may be given a corresponding different appellation. For example, one subframe may be called a TTI (Transmission Time Interval). A plurality of continuous subframes may be called a TTI, and one slot may be called a TTI. That is, each of the subframe and the TTI may be the subframe (1 ms) in existing LTE. Further, each of the subframe and the TTI may be a period shorter than 1 ms (for example, 1 to 13 symbols), or a period longer than 1 ms.

Here, the TTI means a minimum temporal unit for scheduling in the radio communication. For example, in the LTE system, a radio base station performs scheduling for assigning, for each TTI, radio resources (such as a frequency bandwidth and transmission power that are usable in each user terminal) to each user terminal. In this regard, however, the definition of the TTI is not limited to this configuration.

An RB (Resource Block) is a resource assignment unit in the time domain and the frequency domain, and may include one subcarrier or a plurality of contiguous subcarriers in the frequency domain. Further, the RB may include one or more symbols in the time domain, and may have a length corresponding to that of one slot, one subframe, or one TTI. One TTI and one subframe may be each constituted by one or more resource blocks. Here, the RB may be called a PRB (Physical RB), a PRB pair, an RB pair, or the like.

Further, the resource block may be constituted by one or more REs (Resource Elements). For example, one RE may be a radio resource region constituted by one subcarrier or one symbol.

Note that, the above-described structures of the radio frame, the subframe, the slot, and the symbol are just exemplifications. For example, the configurations, such as the number of subframes included in a radio frame, the number of slots included in a subframe, the number of symbols included in a slot, the number of RBs included in a slot, the number of subcarriers included in an RB, the number of symbols within a TTI, the length of a symbol, the length of a CP (Cyclic Prefix), are variously changeable.

Furthermore, pieces of information, parameters, and the like having been described in the Description may be each represented by an absolute value, a relative value from a predetermined value, or a piece of corresponding different information. For example, the radio resource may be denoted by a predetermined index.

Any one of the above-described pieces of information, signals, and the like in the Description may be represented using any of various different technologies. For example, any one of pieces of data, instructions, commands, pieces of information, signals, bits, symbols, chips, and the like that might have been referred to throughout the above description may be represented by a voltage, an electric current, an electromagnetic wave, a magnetic field/magnetic particles, an optical field/photons, or a combination of any of these physical elements.

Further, any one of pieces of software, instructions, pieces of information, and the like may be transmitted/received via a transmission medium. For example, software is transmitted from a website, a server, or a different source using a wired transmission technique (such as a coaxial cable, an optical fiber cable, a twist pair line, a digital subscriber line (DSL)) and/or a wireless transmission technique (such as an infrared ray and a microwave), these wired transmission technique and/or wireless transmission technique are included in the definition of a transmission medium.

Further, the radio base station in the Description may be interpreted as the user terminal. For example, the aspects/embodiments of the present invention may be applied to a configuration in which the communication between the radio base station and the user terminal is replaced by the D2D (device-to-device) communication between any two of a plurality of user terminals. In this case, the configuration may be made such that the user terminal 20 has the above-described functions of the radio base station 10. Further, the terms such as "uplink" and "downlink" may be interpreted as "side". For example, an uplink channel may be interpreted as a side channel.

Similarly, the user terminal in the Description may be interpreted as a radio base station. In this case, the configuration may be made such that the radio base station 10 has the above-described functions of the user terminal 20.

The respective aspects/embodiments described in the Description may be used independently to one another or in combination with one another, and further, may be used in a way that allows the combination to be switched in accordance with an execution condition. Further, a notification of intended information (for example, a notification for notifying that "X is...") is not limited to a notification in an explicit way, and may be made in an implicit way (for example, in a way in which the notification of intended information is not made).

The notification of information is not limited to the aspects/embodiments described in the Description, and may be made in any other way. For example, the notification of information may be made by physical layer signaling (such as DCI (downlink control information) or UCI (uplink control information)), higher-layer signaling (such as RRC (radio resource control) signaling or broadcast information (such as MIB (master information block) or SIB (system information block)), MAC (medium access control) signaling, any other signal, or a combination of any of these notification paths. Further, the RRC signaling may be called an RRC message, and may be, for example, an RRC connection setup message, an RRC connection reconfiguration message, or the like. Further, the MAC signaling may be notified by, for example, a MAC control element (MAC CE).

The respective aspects/embodiments described in the Description may be applied to systems each using any one or ones of, and/or next generation systems each to be expanded based on any one or ones of, LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), any other appropriate radio communication method.

In the processing procedures, sequences, flowcharts, and the like of the respective aspects/embodiments described in the Description, the processing order may be changed, provided that no contradiction arises. For example, in each of the methods having been described in the Description, the presented order of various step elements is just an example, and the order of the various step elements is not limited to the presented specific order.

The present invention has been described in detail so far, and from this detailed description, it is obvious for the skilled in the art that the present invention is not limited to the embodiments having been described in the Description. For example, the foregoing embodiments may be used independently to one another, or may be used in combination with one another. The present invention is capable of being practiced as amended and modified aspects without departing from the gist and the scope of the present invention that are defined by the description of CLAIMS. The description of the Description, therefore, is intended to exemplify the present invention, and does not have any purpose of limiting the present invention.

The present application is based on Japanese Patent Application No. 2016-029885 filed on February 19, 2016, entire content of which is expressly incorporated by reference herein.

## Claims

1. A user terminal that performs communication in a second Transmission Time Interval (TTI) having a shorter TTI length than a first TTI, comprising:
a reception unit that receives, from a radio base station, first downlink control information transmitted for each first TTI, and second downlink control information transmitted in the second TTI; and
a control unit that controls UL transmission in the second TTI based on the first control information and the second control information,
wherein the control unit controls the UL transmission using the first downlink control information that is received before a predetermined period from the second TTI in which the UL transmission is performed, and the second downlink control information that is included in the first TTI in which the first downlink control information is transmitted.

2. The user terminal according to claim 1, wherein the control unit controls the UL transmission based on first control information that is transmitted lastly among pieces of first downlink control information that are transmitted before the second TTI in which the UL transmission is performed.

3. The user terminal according to claim 1 or claim 2, wherein the second TTI, in which the UL transmission is performed, is included in the first TTI in which the first control information, that instructs the UL transmission of the second TTI, is transmitted.

4. The user terminal according to any of claims 1 to 3, wherein the control unit controls so as to selectively receive a UL grant with respect to a first control information allocation region and/or a second control information allocation region to which scheduling control information of the UL transmission in the second TTI is transmitted.

5. The user terminal according to any of claims 1 to 4, wherein the control unit controls so as to transmit at least a part of a plurality of HARQ-ACKs respectively corresponding to DL transmissions of a plurality of second TTIs that is included in a DL transmission period, in a leading second TTI of the UL transmission period.

6. The user terminal according to claim 5, wherein the at least part of the plurality of HARQ-ACKs are HARQ-ACKs with respect to DL transmissions received in second TTIs before a second TTI in which second downlink control information is transmitted that instructs UL transmission of the leading second TTI.

7. The user terminal according to any of claims 1 to 6, wherein the control unit, in a case of performing UL transmissions using a plurality of second TTIs included in a first TTI, determines a UL allocation resource for each of the plurality of second TTIs based on at least two or more pieces of different first downlink control information.

8. The user terminal according to any of claims 1 to 7, wherein the control unit controls communication using TDD that has a different ratio between shortened TTIs used in a UL transmission and shortened TTIs used in a DL transmission.

9. A radio base station that communicates with a user terminal in a second Transmission Time Interval (TTI) having a shorter TTI length than a first TTI, comprising:
a transmission unit that transmits first downlink control information for each first TTI, and transmits second downlink control information in the second TTI;
a reception unit that receives a UL signal which the user terminal transmits in the second TTI based on the first control information and the second control information; and
a control unit that controls scheduling for the UL signal using the first downlink control information that is transmitted before a predetermined period from the second TTI in which the UL signal is transmitted, and the second downlink control information that is included in the first TTI in which the first downlink control information is transmitted.

10. A radio communication method for a user terminal that performs communication in a second Transmission Time Interval (TTI) having a shorter TTI length than a first TTI, comprising the steps of:
receiving, from a radio base station, first downlink control information transmitted for each first TTI, and second downlink control information transmitted in the second TTI; and
performing UL transmission in the second TTI based on the first control information and the second control information,
wherein the method controls the UL transmission using the first downlink control information that is received before a predetermined period from the second TTI in which the UL transmission is performed, and the second downlink control information that is included in the first TTI in which the first downlink control information is transmitted.
